Europäisches Patentamt

European Patent Office

Office européen des brevets

(11) Publication number: **0 413 078 A1**

# EUROPEAN PATENT APPLICATION

(21) Application number: **90100380.6**

(22) Date of filing: **09.01.90**

(51) Int. Cl.5: **C04B 41/50, E01C 11/22, E01F 9/06**

(30) Priority: **17.08.89 JP 211866/89**

(43) Date of publication of application:
**20.02.91 Bulletin 91/08**

(84) Designated Contracting States:
**DE FR GB IT**

(71) Applicant: **Fujimi Ceramic Co., Ltd.**
**3-1 Shiotsukedori Showa-ku**
**Nagoya-shi, 466(JP)**

(72) Inventor: **Hashimoto, Ryusuke**
**200-5 Aza Nakashima, Oaza Kashiwamori**
**Fuso-cho, Niwa-gun(JP)**
Inventor: **Iwata, Mitsuru**
**1012-1, Kamiedo Mitake-cho**
**Kani-gun, Gifu(JP)**
Inventor: **Sugihara, Junichi**
**1012-1, Kamiedo Mitake-cho**
**Kani-gun, Gifu(JP)**
Inventor: **Iwase, Minoru**
**568-25 Fushimi Mitake-cho**
**Kani-gun, Gifu(JP)**

(74) Representative: **Bühling, Gerhard, Dipl.-Chem.**
**Patentanwaltsbüro Tiedtke-Bühling-Kinne**
**Grupe-Pellmann-Grams-Struif Bavariaring 4**
**D-8000 München 2(DE)**

(54) **Method for improving the surface appearance of a water-permeable ceramic molding.**

(57) A surface decorating material comprising, for example, (i) either a flux with or without lead or a frit with or without lead, (ii) a glaze, such as one selected from a group consisting of silica stone, feldspar, clay, lime, zinc white, barium, magnesium and alumina and (iii) an inorganic pigment is applied to a water-permeable ceramic molding by screen printing, spraying or handwriting so as to produce a desired colored pattern on the surface of the ceramic molding or cover the entire surface thereof with a desired color. Then, if necessary, the ceramic molding is dried. Then, the ceramic molding is fired until the ceramic molding has had suitable properties for an intended use, for example, as a material for paving a road.

The ceramic molding may or may not be fired before the surface decorating material is applied thereto.

EP 0 413 078 A1

# METHOD FOR IMPROVING THE SURFACE APPEARANCE OF A WATER-PERMEABLE CERAMIC MOLDING

## REFERENCE TO RELATED APPLICATION

The present application is a continuation in part of U. S. Patent Application No. 071,273 filed June 9, 1987.

## FIELD OF THE INVENTION

This invention relates to a method for improving the surface appearance of a water-permeable ceramic molding.

## BACKGROUND OF THE INVENTION

In the prior art a water-permeable ceramic product such as disclosed in Japanese Patent Publications Nos. 62-100470 and 62-176951 may be given a desired aesthetic appearance on its surface, for example, by using a mold having a pattern which is to be created on the surface of the ceramic product. The pattern created on the surface may or may not be colored later. According to such conventional prior art, however, creating a different pattern requires using a mold with the different pattern. Thus it is a costly method.

## SUMMARY OF THE INVENTION

It is a primary object of the invention to provide an inexpensive method for improving the surface appearance of a water-permeable ceramic molding.

According to the invention, the surface of a water-permeable ceramic molding may be decorated inexpensively with a desired colored pattern or may be simply colored inexpensively.

A water-permeable ceramic molding decorated or colored according to the invention has a high resistance to pollution on its decorated or colored surface.

According to the invention, a surface decorating material comprising, for example, (i) either a flux with or without lead or a frit with or without lead, (ii) a glaze, such as one selected from a group consisting of silica stone, feldspar, clay, lime, zinc white, barium, magnesium and alumina and (iii) an inorganic pigment is applied, in a fine powdery condition, to a water-permeable ceramic molding containing powdery aggregate and a mixture of a plastic ceramic raw material and a fusible material. The surface decorating material may be applied to the ceramic molding by screen printing, spraying or handwriting for the purpose of producing a desired colored pattern on the surface of the ceramic molding or cover the entire surface thereof with a desired color. Then, if necessary, the ceramic molding is dried. Then, the ceramic molding is fired until the ceramic molding has had suitable properties as a desired product, such as a material for paving a road. The firing of the ceramic molding causes the foregoing mixture of the plastic ceramic raw material and the fusible material to fuse around the particles of the powdery aggregate. As a result, gaps communicating with the atmosphere on the surface of the ceramic molding are formed between the particles of the powdery aggregate. The foregoing mixture fused is solidified in the course of time and, as a result, forms lumps together with the particles of the powdery aggregate.

Also, the firing of the ceramic molding causes the surface decorating material thereon to fuse. By fusing, the surface decorating material may soak into the ceramic molding to form an inner decorating layer. In the ceramic molding the surface decorating material adheres to the foregoing lumps.

The ceramic molding may or may not be fired before the surface decorating material is applied thereto.

## BRIEF DESCRIPTION OF THE DRAWING

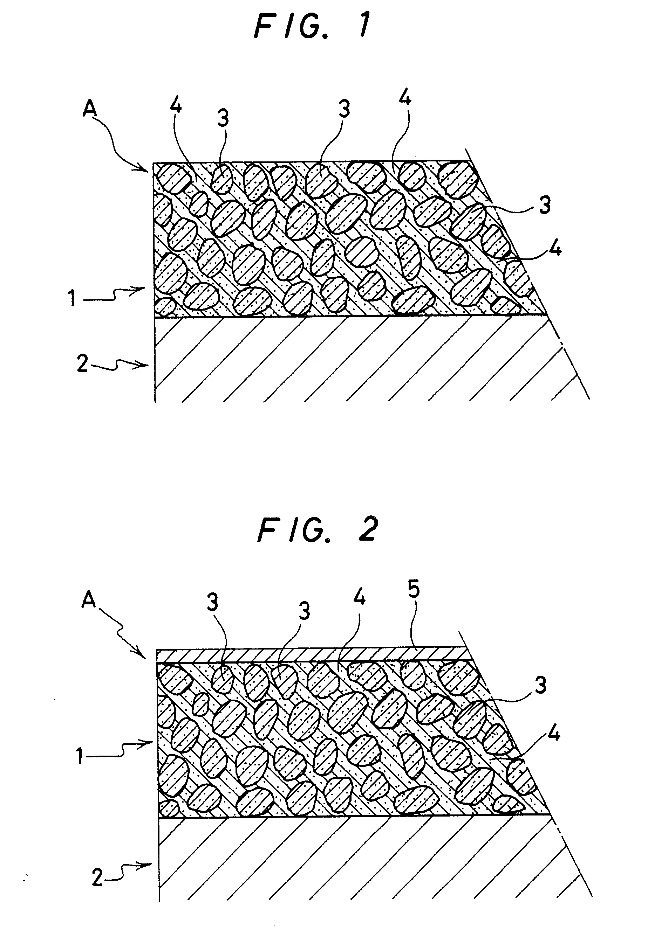

Fig. 1 is a vertical cross section of a water-permeable ceramic product with upper and lower layers, to which product a surface decorating material of the invention may be applied;

Fig. 2 depicts the ceramic product of Fig. 1 to which the surface decorating material of the invention is applied;

Fig. 3 depicts the ceramic product of Fig. 1 fired after a surface decorating material containing a large quantity of flux or a large quantity of frit with a low fusing point has been applied thereto; and

Fig. 4 depicts the ceramic product of Fig. 1 fired after a surface decorating material containing a small quantity of flux or a small quantity of frit with a low fusing point or containing a frit with a high fusing point has been applied thereto;

## DETAILED DESCRIPTION OF THE INVENTION

With reference to the drawing, according to the invention, a surface decorating material 5 comprising (i) either a flux with or without lead or a frit with or without lead, (ii) a glaze, such as one selected from a group consisting of silica stone, feldspar, clay, lime, zinc white, barium, magnesium and alumina and (iii) an inorganic pigment may be applied, in a fine powdery condition, to a water-permeable ceramic molding A which consists of an upper layer 1 and a lower layer 2. The upper layer 1 comprise powdery aggregate $\overline{3}$ and a mixture 4 of a plastic ceramic raw material and a fusible material. The surface decorating material 5 may be applied to the ceramic molding by screen printing, spraying or handwriting for the purpose of producing a desired colored pattern on the surface of the ceramic molding or cover the entire surface thereof with a desired color.

After the surface decorating material has been applied to the ceramic molding, the ceramic molding is dried if necessary.

Then, the ceramic molding is fired. The firing of the ceramic molding causes the mixture of the plastic ceramic raw material and the fusible material to fuse around the particles of the powdery aggregate. As a result, gaps 6 communicating with the atmosphere on the surface of the ceramic molding are formed between the particles 3 of the powdery aggregate. The foregoing mixture fused is solidified as indicated by reference numeral 4' in the course of time and, as a result, forms lumps 3' together with the particles 3 of the powdery aggregate.

The gaps 6 increases the water permeability of the ceramic molding.

Also, the firing of the ceramic molding causes the surface decorating material 5 thereon to fuse.

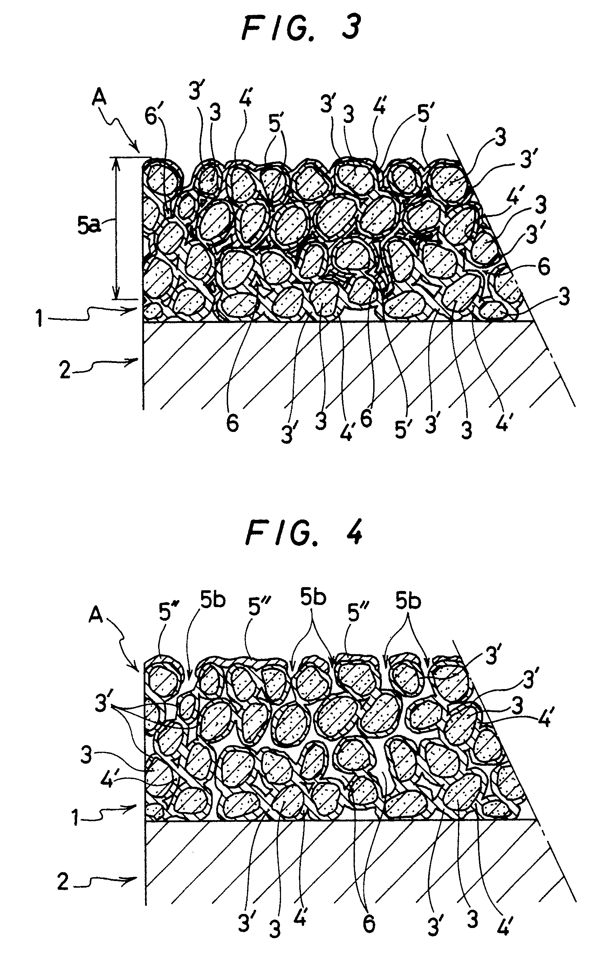

If the surface decorating material 5 contains a large quantity of flux or a large quantity of frit with a low fusing point, the surface decorating material has a small viscosity when it fuses. Therefore, in such a case, the surface decorat ing material 5 soaks well into the upper layer 1 of the ceramic molding as shown in Fig. 3. And the surface decorating material 5 adheres to the particles 3 of the powdery aggregate, as indicated by reference numeral 5'. In the ceramic molding the surface decorating material 5 does not fill up the gaps 6 and, hence, does not adversely affect the increased water permeability of the ceramic molding. In the ceramic molding the surface decorating material 5 forms an inner decorating layer 5a. Thus, the colored pattern or the color created on the product surface by such a surface decorating material does not disappear if the product surface is worn.

However, if the surface decorating material 5 contains a small quantity of flux or a small quantity of frit with a low fusing point or containing a frit with a high fusing point, the surface decorating material 5 has a great viscosity when it fuses. Therefore, in such a case, the surface decorating material hardly soaks into the ceramic molding as shown in Fig. 4. If used in a large quantity, such a surface decorating material may seal the molding surface entirely. Hence, if it is necessary to use such a surface decorating material, it should be used in a small quantity. If used in a small quantity, such a surface decorating material fuses and adheres on the surfaces of the uppermost lumps, as indicated by reference numeral 5" in Fig. 4. That is, the surface decorating material is cracked to provide surface openings 5b which communicate with the inner gaps 6.

The lower layer 2 of the ceramic molding may comprise a mixture of ashes of a sludge, a plastic ceramic raw material and powdery aggregate.

If the surface decorating material is applied to a water-permeable ceramic molding, the ceramic molding may have a decorated surface with a high resistance to pollution.

If desired, before the surface decorating material is applied to a water-permeable ceramic molding, the ceramic molding may be fired such that a mixture of a ceramic raw material and a fusible material thereof is fused around powdery aggregate thereof to provide gaps 6 and is solidified to form lumps 3′ together with the powdery aggregate. The surface decorating material may be applied to such a water-permeable ceramic mold ing in the same manner as described above. Needless to say, such a ceramic molding should be fired again after the surface decorating material has been applied thereto.

If a surface decorating material with a matt glaze is used, the ceramic molding may have a decorated surface with a very great wear resistance.

Different examples of the invention will now be described.

Example 1

Components of Table 1-1 and a small amount of water were mixed together, and the whole was agitated at a rapid rate to form grains. The grains obtained were allowed to dry until the grains had a moisture content of 15 per cent. The grains were then sifted through a 10-mesh screen to provide a body for a lower layer of a water-permeable ceramic product.

Then, components of Table 1-2 and a small amount of water were mixed together, and the whole was agitated at a rapid rate to form grains. The grains obtained were allowed to dry until the grains had a moisture content of 10 per cent. The grains were then sifted through a 10-mesh screen to provide a body for an upper layer of the water-permeable ceramic product.

Then, the body for the lower layer was first supplied into a brick molding machine until the body had filled approximately five sixths of the whole space, or cavity, in the molding machine. Then, the body for the upper layer was supplied into the molding machine until the body had filled the remaining portion of the space in the molding machine. Then, the whole body in the molding machine was molded, under a pressure of 200 kg/cm², to provide an object with dimensions of 200 mm x 100 mm x 60 mm. This process was repeated a number of times to provide a number of same moldings.

A fine powdery mixture of components of Table 1-3 and a printing medium were prepared in the weight ratio 100:35. Then, the fine powdery mixture and the printing medium were kneaded together into a smooth paste. A surface decorating material was thus obtained. The surface decorating material was applied on a screen to form a desired pattern. Then, the pattern was screen-printed on the upper layer of a molding to a thickness of 0.3 millimeters. This process was repeated until all the moldings had been screen-printed with the same patterns with the same thicknesses.

Thereafter, each molding was allowed to dry. Then, each molding was fired through a tunnel kiln for 40 hours at a temperature of 1,100°C. As a result, products with properties of Table 1-4 were obtained.

The pattern on each product was not glossy. The surface decorating material soaked in the molding. But, as shown in Table 1-4, the product had a high water permeability. Also, as shown in Table 1-4, the product had a high wear resistance. Thus, the product was suitable as a material for paving a road.

Additional moldings were obtained in the same manner as described above. The additional moldings were fired before they were screen-printed. After the additional moldings were screen-printed with the same surface decorating materials as the foregoing moldings, they were fired again. Additional products thus obtained had surfaces with substantially the same aesthetic appearances as the foregoing products. However, the surface decorating materials soaked in the additional moldings deeper than in the foregoing moldings. Also, the additional products had greater water permeabilities and greater wear resistances than the foregoing products.

Table 1-1

| Components | Parts by weight | Remarks |
|---|---|---|
| Ashes obtained by burning a sludge obtained by sewage treatment | 40 | Fine powdery ashes with a moisture content of 20 per cent |
| Water-granulated aggregate | 25 | Dried, crushed and passed through a 10-mesh screen |
| River sand | 20 | Dried, crushed and passed through a 10-mesh screen |
| Dust of wall tile | 10 | Dried, crushed and passed through a 10-mesh screen |
| Gairome clay | 5 | Cake with a moisture content of 30 per cent |

Table 1-2

| Components | Parts by weight | Remarks |
|---|---|---|
| Sewage sludge obtained in a factory | 25 | Cake with a moisture content of 30 per cent |
| Water-granulated aggregate | 20 | Dried, crushed and passed through a 10-mesh screen |
| River sand | 30 | Dried, crushed and passed through a 10-mesh screen |
| Dust of wall tile | 15 | Dried, crushed and passed through a 10-mesh screen |
| Gairome clay | 10 | Cake with a moisture content of 30 per cent |

Table 1-3

| Components | Parts by weight | Remarks |
|---|---|---|
| Flux (borosilicate) | 70 | Containing $PbO$, $B_2O_3$, $SiO_2$, $Na_2O$ and the like |
| Pigment (Turkish blue) | 15 | Zr-Si-V type pigment |
| Pigment (cobalt blue) | 15 | Co-Si type pigment |

Table 1-4

| Characteristics | Values |
|---|---|
| Color of surface | The pattern had a light blue color.<br>The portion of the surface other than the pattern had a light cream color. |
| Wear resistance | 0.01 gram [by sanding] (based on JIS A5209) |
| Surface hardness | The pattern had a Mohs hardness of 7 to 8.<br>The portion of the surface other than the pattern had a Mohs hardness of 6 to 7. |
| Skid resistance<br>Water permeability | 0.8 (based on JIS A1407)<br>$5 \times 10^{-2}$ cm/sec. or higher |

Example 2

A number of same moldings as the moldings of Example 1 were produced in the same manner as in Example 1. A slurry containing components of Table 2-1 was prepared. The slurry was sprayed on each molding by a spray-gun to produce thereon a desired pattern with a thickness of 0.5 millimeters. That is, the slurry was used as a surface decorating material.

Each molding was then fired through a tunnel kiln for 40 hours at a temperature of 1,100°C. As a result, products with properties of Table 2-2 were obtained.

The pattern on the product was slightly glossy. The surface texture of the product was like that of a natural stone. The surface decorating material soaked in the molding. The pattern had a high resistance to discoloration. However, as shown in Table 2-2, the product had a high water permeability. Also, as shown in Table 2-2, the product had a high wear resistance. Thus, the product was suitable as a material for paving a road.

Table 2-1

| Components | Parts by weight | Remarks |
|---|---|---|
| Transparent leadless frit | 45 | Containing $K_2O$, $Na_2O$, $CaO$, $MgO$, $Al_2O_3$, $B_2O_3$, $SiO_2$ and the like |
| Barium carbonate | 10 | Usually used as a ceramic raw material |
| Kamato feldspar | 25 | Usually used as a ceramic raw material |
| Korean kaolin | 20 | Usually used as a ceramic raw material |

Table 2-2

| Characteristics | Values |
|---|---|
| Color of surface<br>Wear resistance<br>Surface hardness<br>Skid resistance<br>Water permeability | The pattern had a surface texture like that of a natural stone.<br>0.01 gram [by sanding] (based on JIS A5209)<br>Mohs hardness of 7 to 8<br>0.8 (based on JIS A1407)<br>$5 \times 10^{-2}$ cm/sec. or higher |

Example 3

A number of same moldings as the moldings of Example 1 were produced in the same manner as in Example 1. A slurry containing components of Table 3-1 was prepared. The slurry was sprayed on each molding by a spay-gun to produce thereon a desired pattern with a thickness of 0.25 millimeters. That is, the slurry was used as a surface decorating material. Before the slurry was sprayed, the portion of the surface of the molding on which no slurry was to be sprayed was covered with a mask.

Each molding was then fired through a tunnel kiln for 40 hours at a temperature of 1,100°C. As a result, products with properties of Table 3-2 were obtained.

The pattern on the product was glossy. Also, the pattern had a bright color. In addition, as shown in Table 3-2, the product had a high water permeability. Thus, the product was suitable as a material for paving a road.

Table 3-1

| Components | Parts by weight | Remarks |
|---|---|---|
| Transparent frit containing lead | 80 | Containing $PbO$, $Na_2O$, $Al_2O_3$, $B_2O_3$, $SiO_2$ and the like |
| Zinc white | 5 | Usually used as a ceramic raw material |
| Korean kaolin | 15 | Usually used as a ceramic raw material |
| Pigment of a brown color | 6 | Fe-Cr-Zn type pigment |

Table 3-2

| Characteristics | Values |
|---|---|
| Color of surface | The pattern had a browm color. The portion of the surface other than the pattern had a light cream color. |
| Wear resistance Surface hardness Skid resistance Water permeability | 0.02 gram [by sanding] (based on JIS A5209) Mohs hardness of 6 to 7 0.7 (based on JIS A1407) $5 \times 10^{-2}$ cm/sec. or higher |

A surface decorating material comprising, for example, (i) either a flux with or without lead or a frit with or without lead, (ii) a glaze, such as one selected from a group consisting of silica stone, feldspar, clay, lime, zinc white, barium, magnesium and alumina and (iii) an inorganic pigment is applied to a water-permeable ceramic molding by screen printing, spraying or handwriting so as to produce a desired colored pattern on the surface of the ceramic molding or cover the entire surface thereof with a desired color. Then, if necessary, the ceramic molding is dried. Then, the ceramic molding is fired until the ceramic molding has had suitable properties for an intended use, for example, as a material for paving a road.

The ceramic molding may or may not be fired before the surface decorating material is applied thereto.

**Claims**

1. A method for improving the surface appearance of a water-permeable ceramic molding with inner lumps and with inner gaps located between the lumps, comprising

(a) applying to the ceramic molding a surface decorating material which is capable of adhering to the surfaces of the inner lumps of the ceramic molding if the surface decorating material is heated, and

(b) firing the ceramic molding.

2. A method in accordance with claim 1 wherein the surface decorating material comprises (i) a material selected from a group consisting of a leaded flux, a leadless flux, a leaded frit and a leadless frit, (ii) a glaze, such as one selected from a group consisting of silica stone, feldspar, clay, lime, zinc white, barium, magnesium and alumina and (iii) an inorganic pigment, and

3. A method in accordance with claim 1 wherein the surface decorating material is applied to the ceramic molding such that a desired colored pattern is produced on the surface of the ceramic molding.

4. A method in accordance with claim 2 wherein the surface decorating material is applied to the ceramic molding such that a desired colored pattern is produced on the surface of the ceramic molding.

5. A method in accordance with claim 1 wherein the surface decorating material is applied to the ceramic molding by a method selected from a group consisting of screen printing, spraying and handwriting.

6. A method in accordance with claim 2 wherein the surface decorating material is applied to the ceramic molding by a method selected from a group consisting of screen printing, spraying and handwriting.

7. A method in accordance with claim 3 wherein the surface decorating material is applied to the ceramic molding by a method selected from a group consisting of screen printing, spraying and handwriting.

8. A method in accordance with claim 4 wherein the surface decorating material is applied to the ceramic molding by a method selected from a group consisting of screen printing, spraying and handwriting.

EP 0 413 078 A1

FIG. 1

FIG. 2

# F I G. 3

# F I G. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 213 252 (CENTRE DE MEDITATIONS SCIENTIFIQUES ET TECHNIQUES) <br> * page 1, lines 4 - 40 * * page 2, lines 14 - 25 * * page 5, lines 7 - 21 @ page 6, line 23 - page 7, line 34; claims 1, 7, 17, 22 * | 1,3,5,7 | C 04 B 41/50 <br> E 01 C 11/22 <br> E 01 F 9/06 |
| X | DE-A-2 033 689 (FERRO CORPORATION) <br> * page 1, line 1 - page 2, line 10 * * page 5, line 10 - page 6, line 16 * * page 7, lines 8 - 20 @ page 9, lines 13 - 20 * | 1-8 | |
| A | GB-A-1 018 523 (CELOTEX CORPRATION) <br> * page 1, lines 15 - 56 ** table * * page 4, line 58 - page 5, line 2 * * page 6, lines 4 - 28 * | 1-2,5-6 | |
| A | WO-A-8 602 346 (ISOVOLTA, ÖSTERRICHISCHE ISOLERSTOFFWERKE AG) <br> * page 1, line 12 - page 3, line 1 * * page 5, line 23 - page 8, line 26 @ page 9, line 17 - page 10, line 18; claims 1, 5-6, 10, 21 * | 1-2,5-6 | |
| A | DE-B-1 025 779 (TREUHANDGESELLSCHAFT FÜR FINANCIERUNGEN M.B.H.) <br> * column 1, line 1 - column 2, line 36 * * column 3, lines 27 - 70 * * column 4, lines 15 - 49 * * claims 1-2, 15-19 * | 1-8 | **TECHNICAL FIELDS SEARCHED (Int. Cl.5)** <br><br> C 04 B <br> E 01 C |

The present search report has been drawn up for all claims

| Place of search | Date of completion of search | Examiner |
|---|---|---|
| The Hague | 23 November 90 | NORGREN-OLSSON |